## Europäisches Patentamt

## European Patent Office

## Office européen des brevets

(11) Veröffentlichungsnummer: **0 048 319**
**B1**

# (12) EUROPÄISCHE PATENTSCHRIFT

(45) Veröffentlichungstag der Patentschrift:
**12.09.84**

(21) Anmeldenummer: **81104716.6**

(22) Anmeldetag: **19.06.81**

(51) Int. Cl.³: **C 10 K 1/12, C 01 B 17/16**

(54) **Verfahren zum Auswaschen von H2S aus Kokereigas nach dem Sulfammon-Verfahren.**

(30) Priorität: **24.09.80 DE 3035895**

(43) Veröffentlichungstag der Anmeldung:
**31.03.82 Patentblatt 82/13**

(45) Bekanntmachung des Hinweises auf die Patenterteilung:
**12.09.84 Patentblatt 84/37**

(84) Benannte Vertragsstaaten:
**BE FR GB IT NL**

(56) Entgegenhaltungen:
**DE - B - 1 085 641**
**DE - B - 1 165 197**
**FR - A - 2 116 099**

(73) Patentinhaber: **Dr. C. Otto & Comp. Gesellschaft mit beschränkter Haftung, Christstrasse 9, D-4630 Bochum 1 (DE)**

(72) Erfinder: **Ritter, Horst, Bergebuschstrasse 12, D-4300 Essen (DE)**

(74) Vertreter: **Radt, Finkener, Ernesti Patentanwälte, Heinrich-König-Strasse 119, D-4630 Bochum 1 (DE)**

**Beschreibung**

Die Erfindung betrifft ein Verfahren zum Auswaschen von $H_2S$ aus Kokereigas nach dem Sulfammon-Verfahren, bei dem der Schwefelwasserstoff zunächst in einem $H_2S$-Wascher mit Ammoniakwasser und anschliessend das im Koksofengas enthaltene Ammoniak durch Auswaschen mit Wasser entfernt wird und die aus dem $H_2S$-Wascher ablaufende Waschflüssigkeit auf den Kopf eines Entsäurers gegeben wird, in dem durch Wasserdampf und gegebenenfalls $NH_3$-Dämpfe aus einem $NH_3$-Abtreiber Schwefelwasserstoff ausgetrieben und einer weiteren Verwertungsanlage zugeführt wird, während ein Teil des Ablaufes des Entsäurers als Kreislaufwasser auf eine zwischen 25 und 30°C liegende Temperatur heruntergekühlt und auf den $H_2S$-Wascher in dessen mittleren Bereich aufgegeben wird.

Bekanntlich kann der Wirkungsgrad der Schwefelwasserstoffauswaschung aus Koksofengas erheblich gesteigert werden, wenn im $H_2S$-Wascher gleichzeitig mit dem Schwefelwasserstoff auch Ammoniak ausgewaschen wird. Die Absorption von Ammoniak im $H_2S$-Wascher erreicht man dadurch, dass der Ammoniakgehalt des Koksofengases durch Rückführung von Ammoniak angehoben und gleichzeitig der Ammoniakgehalt im Waschwasser möglichst niedrig gehalten wird. Das für die Rückführung benötigte Ammoniak wird bei bekannten Verfahren durch Entnahme der Kopfdämpfe aus dem Ammoniakabtreiber oder durch Abtrieb des heissen, entsäuerten Kreislaufwassers durch Koksofengas gewonnen.

Aus der FR-A 2116099 ist ein Verfahren zum Auswaschen von Schwefelwasserstoff aus Kokereigas bekannt, bei dem aus einem Entsäurer ablaufendes ammoniakhaltiges Wasser mit einer Temperatur von etwa 30°C in den Wascher eingeleitet wird. Dabei wird kein Ammoniak freigesetzt. Um dies zu erreichen, sieht das bekannte Verfahren vor, einen Teilstrom des entsäuerten Ammoniakwassers abzuzweigen, mit Ammoniak anzureichern und die angereicherte Lösung mit einer Temperatur von 50°C in den Wascher einzuleiten.

Der Erfindung liegt die Aufgabe zugrunde, dass für die Ammoniakrückführung benötigte Ammoniak in einer besonders zweckmässigen und vorteilhaften Weise zur Verfügung zu stellen und Korrosionen in dem System weitgehend zu vermeiden.

Ausgehend von einem Verfahren der eingangs beschriebenen Art besteht die Erfindung darin, dass 40–60% des Kreislaufwassers unter erhöhtem Druck über Sprühdüsen im mittleren Bereich des $H_2S$-Waschers verdüst werden und dass unterhalb der Düsen ein der eingedüsten Menge entsprechender Anteil der Waschflüssigkeit aus dem $H_2S$-Wascher abgezogen und zusammen mit der vom $NH_3$-Wascher kommenden Waschlösung auf den Kopf des $H_2S$-Waschers aufgegeben wird.

Eine zweckmässige Ausführungsform der Erfindung sieht vor, dass der Rest des Kreislaufwassers auf den Kopf des $H_2S$-Waschers aufgegeben wird.

Durch die Verfahrensweise gemäss vorliegender Erfindung ergibt sich dadurch ein besonderer Effekt, dass ein beträchtlicher Teil des Ammoniaks, das in dem vom Entsäurer kommenden Kreislaufwasser enthalten ist, aus der Flüssigkeit eintgast und ins Koksofengas übergeht. Dies ist darauf zurückzuführen, dass durch den beim Verdüsen auftretenden Unterdruck das Lösungsvermögen von Ammoniak im Waschwasser stark reduziert wird. Das freiwerdende Ammoniak geht in das von unten nach oben aufsteigende Koksofengas über und reichert dieses an.

Gleichzeitig wird die Aufgabekonzentration an Ammoniak, d. h. die Konzentration der Wässer, die auf den Kopf des Waschers aufgegeben werden, verringert. Infolge des grossen $NH_3$-Partialdruckgefälles zwischen Gas und Flüssigkeit wird im oberen Teil des $H_2S$-Waschers zunächst Ammoniak und danach fast gleichzeitig selektiv Schwefelwasserstoff absorbiert, d. h. es wird nur eine geringe Menge des im Gas befindlichen Kohlendioxids von der Flüssigkeit aufgenommen.

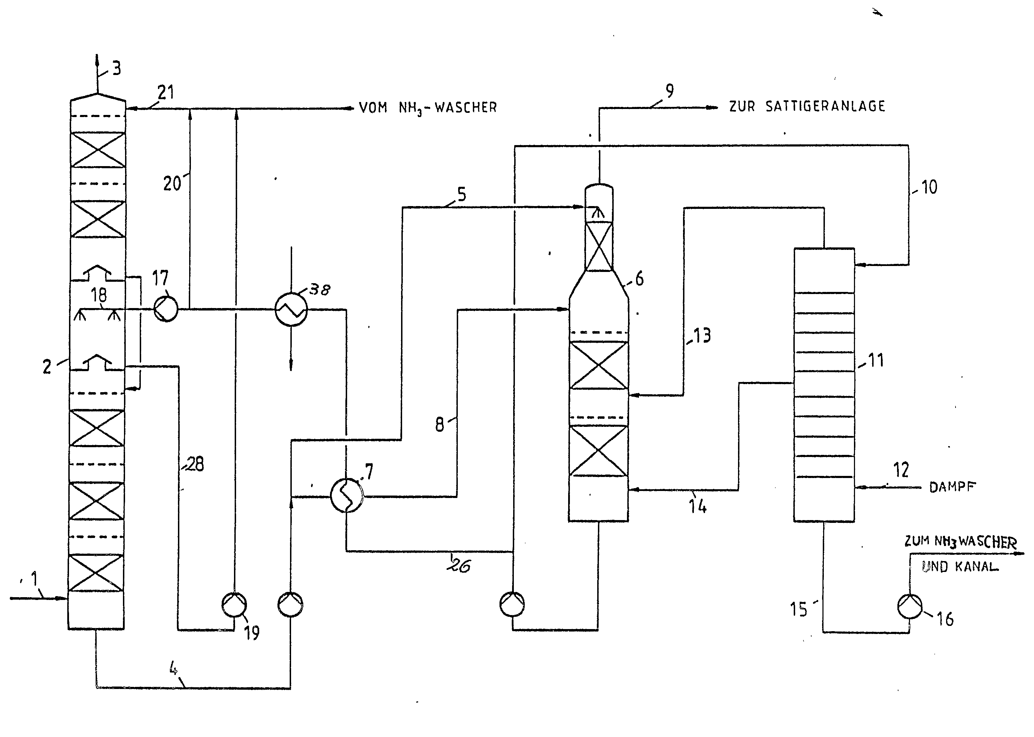

Auf der Zeichnung ist ein Schema der Verfahrensweise gemäss vorliegender Erfindung dargestellt.

Das zu reinigende Koksofengas tritt durch die Leitung 1 in den $H_2S$-Wascher 2 ein und verlässt ihn am oberen Ende über die Leitung 3. Ein Teilstrom der den Wascher verlassenden Lösung wird über die Leitungen 4 und 5 auf den Kopf des Entsäurers 6 aufgegeben. Der Hauptstrom wird über den Wärmeaustauscher 7 und die Leitung 8 ebenfalls in den Entsäurer eingeleitet, in dem der in der Flüssigkeit enthaltene Schwefelwasserstoff ausgetrieben und über die Leitung 9 der weiteren Verwertung, beispielsweise in einer Sättigungsanlage, zugeführt wird. Ein Teilstrom des den Entsäurer 6 verlassenden Wassers wird über eine Leitung 10 in einen Abtreiber 11 eingeleitet, in dem mit über die Leitung 12 zugeführtem Dampf das Ammoniak abgetrieben wird, das über die Leitungen 13 und 14 dem Entsäurer zugeführt wird. Die aus dem Abtreiber ablaufende Flüssigkeit gelangt über die Leitung 15 und eine Pumpe 16 zum Ammoniakwäscher und zum Kanal.

Der andere Teilstrom des den Entsäurer 6 verlassenden Wassers wird über die Leitung 26, den Wärmeaustauscher 7 und einen weiteren, mit Kühlwasser beaufschlagten indirekten Kühler 38 in den $H_2S$-Wascher 2 zurückgeleitet. Die Erfindung sieht vor, dieses Kreislaufwasser nicht in der bekannten Weise zusammen mit dem vom $NH_3$-Wascher kommenden Waschwasser auf den Kopf des $H_2S$-Waschers aufzugeben, sondern zumindest teilweise über eine Pumpe 17 unter erhöhtem Druck über Sprühdüsen 18 im mittleren Bereich des $H_2S$-Waschers zu verdüsen. Dabei erreicht das Waschwasser in den Sprühdüsen eine so hohe Strömungsgeschwindigkeit, dass ein erheblicher Unterdruck entsteht, der das Lösungsvermögen von Ammoniak im Waschwasser reduziert, so dass ein beträchtlicher Teil des Ammoniaks aus der Flüssigkeit entgast und ins Koksofengas übergeht. Das weitgehend entgaste Wasser wird unterhalb der Sprühdüsen über die Leitung 28 abgezogen und mittels einer Pumpe 19 zusammen mit dem vom NH₂-Wascher kommenden Waschwasser und gegebenenfalls einem über die Leitung 20 zugeführten Teilstrom des Kreislaufwassers vom Entsäurer über die Leitung 21 auf den Kopf des H₂S-Waschers aufgegeben. Dieses Waschwasser, das eine niedrige Ammoniakkonzentration hat, absorbiert infolge des grossen NH₃-Partialdruckgefälles zwischen Gas und Flüssigkeit zunächst Ammoniak und danach fast gleichzeitig selektiv Schwefelwasserstoff, so dass nur eine geringe Menge des im Gas befindlichen Kohlendioxids mit absorbiert wird.

Diese Methode der Freisetzung von NH₃ hat gegenüber vielen anderen Verfahren den Vorteil, dass sowohl die Temperatur der freigesetzten Dämpfe als auch die Temperatur des gestrippten Waschwassers bei ca. 25°C liegt, so dass keine über das übliche Mass hinausgehende Korrosion im System auftritt.

**Patentansprüche**

1. Verfahren zum Auswaschen von H₂S aus Kokereigas nach dem Sulfammon-Verfahren, bei dem der Schwefelwasserstoff zunächst in einem H₂S-Wascher mit Ammoniakwasser und anschliessend das im Koksofengas enthaltene Ammoniak durch Auswaschen mit Wasser entfernt wird und die aus dem H₂S-Wascher ablaufende Waschflüssigkeit auf den Kopf eines Entsäurers gegeben wird, in dem durch Wasserdampf und gegebenenfalls NH₃-Dämpfe aus einem NH₃-Abtreiber Schwefelwasserstoff ausgetrieben und einer weiteren Verwertungsanlage zugeführt wird, während ein Teil des Ablaufes des Entsäurers als Kreislaufwasser auf eine zwischen 25 und 30°C liegende Temperatur heruntergekühlt und auf den H₂S-Wascher in dessen mittleren Bereich aufgegeben wird, dadurch gekennzeichnet, dass 40–60% des Kreislaufwassers unter erhöhtem Druck über Sprühdüsen im mittleren Bereich des H₂S-Waschers verdüst werden und dass unterhalb der Düsen ein der eingedüsten Menge entsprechender Anteil der Waschflüssigkeit aus dem H₂S-Wascher abgezogen und zusammen mit der vom NH₃-Wascher kommenden Waschlösung auf den Kopf des H₂S-Waschers aufgegeben wird.

2. Verfahren nach Anspruch 1, dadurch gekennzeichnet, dass der Rest des Kreislaufwassers auf den Kopf des H₂S-Waschers aufgegeben wird.

**Claims**

1. Process for washing H₂S out of coke-oven gas according to the sulfammon method, in which the hydrogen sulphide is first removed in an H₂S scrubber with ammonia water and then the ammonia contained in the coke-oven gas is removed by washing out with water and the washing liquid leaving the H₂S scrubber is fed to the top of a deacidifier, in which hydrogen sulphide is removed by steam and, possibly, NH₃ vapours from an NH₃ separator, and is fed to another processing plant, while some of he deacidifier outlet is cooled, as circulating water, to a temperature of between 25 and 30°C and fed to the H₂S scrubber in the middle zone thereof, characterised in that 40–60% of the circulating water is sprayed at elevated pressure by means of spraying nozzles in the middle zone of the H₂S scrubber and a proportion of the washing liquid corresponding to the sprayed quantity is withdrawn from the H₂S scrubber beneath the spraying nozzles and is fed to the top of the H₂S scrubber together wih the washing solution coming from the NH₃ scrubber.

2. A process according to claim 1, caracterised in that the rest of the circulating water is fed to the top of the H₂S scrubber.

**Revendications**

1. Procédé pour éliminer par lavage du H₂S de gaz de cokerie selon la méthode sulfammon, dans lequel l'acide sulfhydrique est tout d'abord éliminé dans un laveur de H₂S avec de l'eau ammoniacale, après quoi l'ammoniac renfermé par les gaz du four à coke est éliminé par lavage à l'eau et le liquide de lavage s'écoulant du laveur de H₂S est délivré à la tête d'un désacidificateur dans lequel, au moyen de vapeur d'eau et éventuellement de vapeurs de NH₃, de l'acide sulfhydrique est expulsé d'un éliminateur de NH₃ et est dirigé vers une installation de récupération ultérieure, tandis qu'une partie de l'écoulement du désacidificateur est refroidie, en tant qu'eau de circuit, jusqu'à une température comprise entre 25 et 30°C et est délivrée au laveur de H₂S dans la région centrale de ce dernier, caractérisé par le fait qu'entre 40–60% de l'eau du circuit sont pulvérisés sous une pression accrue, par l'intermédiaire de buses de pulvérisation, dans la zone centrale du laveur de H₂S; et par le fait que, au-dessous des buses, une part du liquide de lavage correspondant à la quantité introduite par pulvérisation est prélevée du laveur de H₂S et est délivrée à la tête du laveur de H₂S conjointement à la solution de lavage provenant du laveur de NH₃.

2. Procédé selon la revendication 1, caractérisé par le fait que le reste de l'eau du circuit est délivré à la tête du laveur de H₂S.

VOM NH₃ - WASCHER

ZUR SATTIGERANLAGE

DAMPF

ZUM NH₃ WASCHER
UND KANAL

0048319